Europäisches Patentamt

European Patent Office

Office européen des brevets

(19)

(11) Publication number : **0 492 922 A1**

## (12) EUROPEAN PATENT APPLICATION

(21) Application number : **91311662.0**

(22) Date of filing : **16.12.91**

(51) Int. Cl.⁵ : **B65G 17/00**

(30) Priority : **24.12.90 US 633325**

(43) Date of publication of application :
**01.07.92 Bulletin 92/27**

(84) Designated Contracting States :
**DE ES FR GB IT**

(71) Applicant : **Thiele Engineering Company**
**7225 Bush Lake Road**
**Minneapolis Minnesota 55435 (US)**

(72) Inventor : **Snyder, Gene Walter**
**6412 Westchester Circle**
**Minneapolis, Minnesota 55427 (US)**
Inventor : **Pan, Peter N.Y.**
**18408 Timber Ridge Drive**
**Minnetonka, Minnesota 55345 (US)**

(74) Representative : **Parr, Ronald Edward R.E. Parr**
**& Co.**
**Colman House Station Road**
**Knowle Solihull West Midlands B93 0HL (GB)**

(54) **Lane divider.**

(57)    Lane divider for conveyor systems which converts from one product path to multiple paths or from multiple paths to a single path. The lane divider system separates a product trail into discrete paths with automatic control for the flow of product.

FIGURE 1

EP 0 492 922 A1

Jouve, 18, rue Saint-Denis, 75001 PARIS

The present invention relates to apparatus for use in conveyor systems. In particular, it relates to apparatus (referred to below also as a "lane divider") for converting from one product path to multiple paths or from multiple paths to a single path.

In the prior art, many attempts have been made to modify conveyor systems to separate a flow of product or other material into multiple lines for packaging purposes. Devices such as deflectors to steer product in mobile class have not proven effective. What is needed is a simple, well-controlled system for dividing product into separate lanes, such as for packaging.

The present invention, in a first aspect, provides a lane divider apparatus for increasing or decreasing the number of lanes of product in a conveyor system, characterised in that it comprises:

a. moveable pallets (20) for carrying the product;

b. carriers (18) on which the pallets are mounted for transverse pallet movement across the apparatus;

c. driver system (16a, 16b) to which the carriers are mounted for moving the carriers continuously longitudinally through the apparatus;

d. multiple tracks (52) defining corresponding multiple paths through the apparatus, the pallets being slidably attached to the tracks while carrying product; and

e. a pallet guide (80) moveably mounted on the apparatus for operational connection to each of the tracks for directing pallets into selected tracks.

The present invention provides a means of separating a product trail or stream into discrete paths with automatic control for the flow of product.

In a second aspect the invention provides apparatus for dividing a flow of product from a conveyor into multiple paths, characterised in that the apparatus comprises:

a. a frame (11);

b. a driver (16a, 16b) mounted on the frame for continuous movement along a cyclic path from a first end (21a) of the frame longitudinally along a top side (12) of the frame to a second end (21b), down around the second end, back along a bottom (14) of the frame, and upward to the top of the frame at the first end;

c. transverse rods (18) mounted on the driver for longitudinal movement along the path;

d. at least one pallet (20) for receiving product to be conveyed, the pallet slidably mounted on the rods for transverse movement across the rods while the pallet is carried along the path by the rods;

e. multiple lane tracks mounted within the frame in a diverging pattern from a central point at said first end so that the tracks are spaced apart at the said second end, the tracks being adapted for slidable engagement to the pallets; and

f. pallet director (80) mounted for movement among multiple positions corresponding to each of the tracks and for receiving pallets from the bottom side of the apparatus and directing each pallet to one of the selected tracks at the central point as the pallet rises to the top of the apparatus.

In a third aspect the invention provides apparatus for providing a plurality of sub-streams of material from a single stream of the material, characterised in that it comprises:

two or more tracks (52) respectively for said sub-streams, the tracks extending from a common loading location (21a) and each extending to a separate unloading location (21b);

a plurality of carriers (20) adapted to be moved along said tracks;

a return track for the carriers whereby they can be returned from the unloading locations to the loading location; and

a director (80) to direct the carriers to respective predetermined ones of said tracks.

The description that follows relates to a preferred form of a lane divider which includes pallets for carrying product, multiple tracks for guiding pallets on multiple paths, return rails for directing the pallets back after unloading product , and diverter means for selecting which track each pallet shall follow. In a preferred embodiment the tracks are of a rectangular cross-section having a slot for guiding the pallets. Each pallet has a projecting lug which rides in the slot and allows the pallet to follow a proper lane. The pallets are preferably mounted for free transverse movement on rods.

The rods can be mounted in conveyor fashion, having, for example, each end mounted on chain drives to move the rods, and therefore the pallets, through the system. The pallets continually circle through the system on the rod and chain apparatus, while their particular path of the system is selected by diverter means which guides the pallet to one of the multiple tracks.

There is now described, by way of example and with reference to the accompanying drawings, apparatus according to a preferred embodiment of the invention.

In the drawings:

FIG. 1 is a top plan of the apparatus but omitting, for the same of clarity, most of the pallets and rods;

FIG. 2 is an end elevation of the apparatus of FIG.1;

FIG. 3 is a side elevation of the apparatus of FIG.1; and

FIG. 4 is a cross-sectional view of a pallet (and portions of adjacent pallets) of the apparatus of FIG. 1

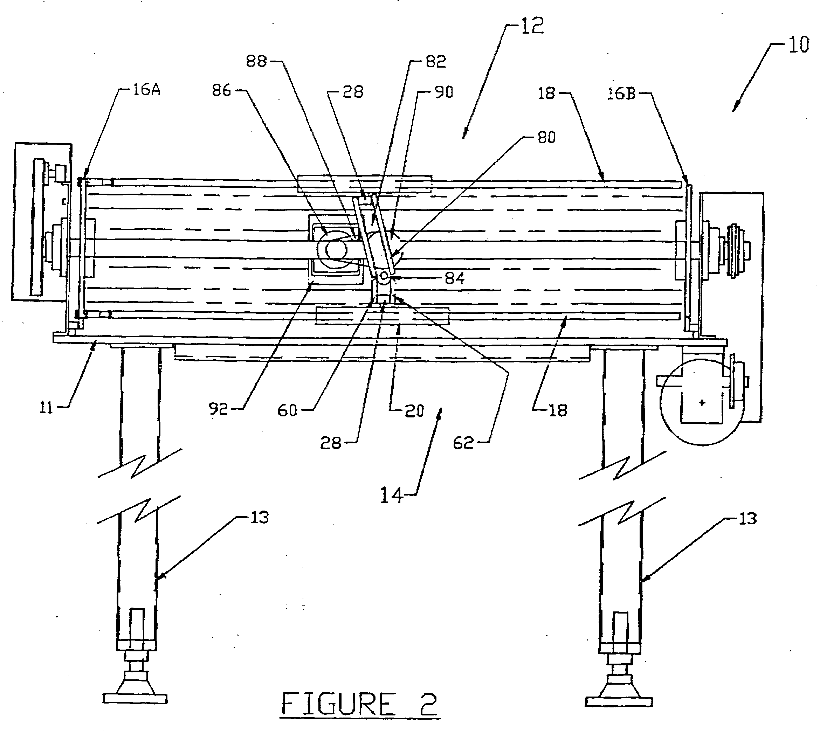

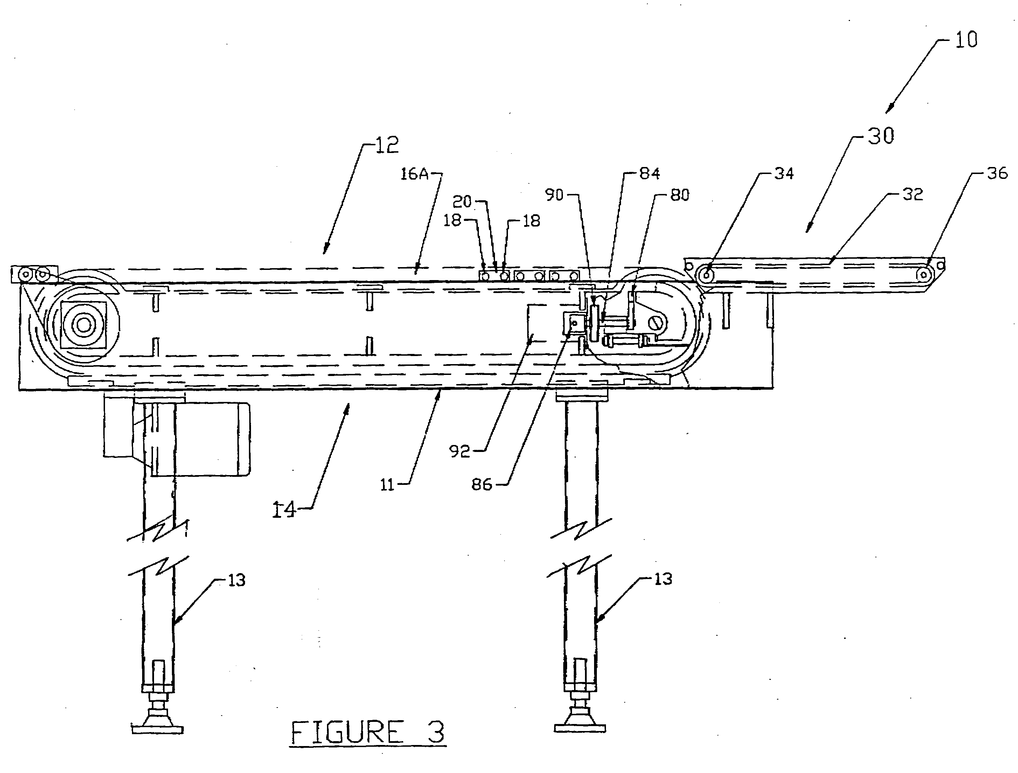

The apparatus or lane divider (10) (also referred to below as "system") comprises a frame (11) having a top side (12). Frame (11) is supported by legs (13) mounted on a bottom side (14) as illustrated in FIG. 2 and FIG. 3. Mounted in frame (11) is conveyor apparatus (15) which consists of two-side drive means (16a and 16b) , which are preferably chain drives, for continuously moving in a cyclic path around frame (11).

Mounted transversely between drive means (16a and 16b) is a series of conveyor rods or other elongate members (18). While it is to be understood that the entire drive means (16a and 16b) is filled with conveyor rods (18), only a few are illustrated in the present example, the remainder being omitted for clarify of understanding other parts of the drawing. Mounted on conveyor rods (18) are pallets or other carriers (20) used to convey goods or other material from a first end (21a) to a second end (21b) of apparatus (10).

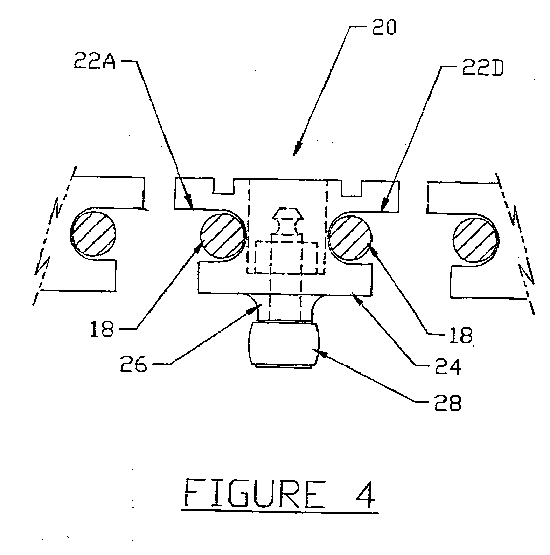

As shown in FIG. 4, pallet (20) is a block of material, for example a plastics material which has formed therein two parallel, longitudinal grooves or other recesses (22a, 22b)on opposite sides of the pallet which engage two parallel conveyor rods (18) so that the pallet is free to slide transversely on the rods (18) across the entire width of system (10).

Lower surface (24) of pallet (20) carries a lug (26) which has, at its distal end, an enlarged cam follower (boss) (28) which serves to control transverse motion of pallets (20) within system (10). In the disposition shown in FIG. 4, that is, in the upper side (12) of the apparatus, the lug (26) and boss (28) are downwardly directed.

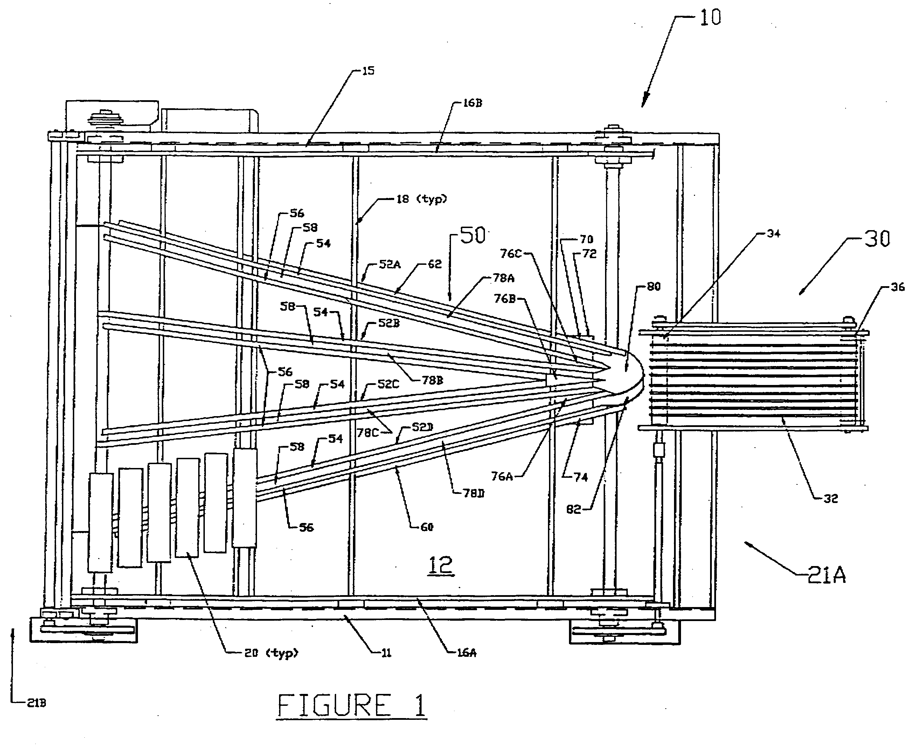

As shown in FIG. 1, drive means (16a-16b) continuously moves on sprockets so that the pairs of conveyor rods (18) are continuously cycling from first end (21a) over the top side (12) to second end (21b), and back along bottom side (14), each pair carrying with it one pallet (20). The pallets (20) move from first end (21a) to second end (21b) along the top side (12) of the system (10). At the second end (21b), pallets (20), since they are mounted on drive means (16a - 16b), follow down and return in an upside down path along the bottom side (14) of system (10) until they reach the first end (21a ) of their travel, at which time they once again move upward to the top side (12) for another cycle through system (10).

Product is provided to pallets (20)by a feed conveyor (30),which includes conveyor belt (32)moving on cylindrical drives (34 and 36). Conveyor belt (32) moves product provided to system (10) up to the point where product is dumped onto successive pallets (20) as they emerge from underneath system (10). Feed conveyor (30) may be, for example, any conventional conveyor system known in the prior art for feeding a stream of product to system (10).

The present invention moves pallets (20) into multiple paths by lane means (50) which comprises, for example, four tracks (52a-52d) each constructed of a right-hand rail (54) and a left-hand rail (56). The cross section of the track is, therefore, generally square or otherwise rectangular and has a slot (58) longitudinally extending the length of the track.

When moving through system (10), cam follower (28) of pallet (20) rides in track (52) along slot (58).

In operation, a pallet (20) will follow a track (52) from first end (21a) to second end (21b) in FIG. 1 until it reaches the left-hand end of slot (58) near the second end (21b). Pallet (20) then exits tracks (52) and drops down, as controlled by drive means (16a-16b), to the bottom side (14) of the system (10) for return.

On bottom side (14) are mounted left-hand and right-hand cam rails or other guides (60, 62) which funnel or direct pallets (20) to the center of system (10) on their return along the bottom side (14) of system (10) below the lane means (50). Cam rails (60 and 62) are preferably bars which urge or cause the cam followers 28 of pallets 20 to move inwardly like a funnel to return all pallets 20 to the center of system 10 at the first end 21a.

Pallets 20 are sorted into selected tracks 52 by pallet guide 70 which has side members 72 and 74 forming the outer guides for contact with cam followers 28 of pallets 20. Within pallet guide 70 are three pointed finger-like dividers 76a, 76b and 76c, which direct cam followers 28 and form four pallet paths 78a, 78b, 78c, and 78d.

Paths 78a-78d are selected by moveable pallet director 80 which defines a generally semi-circular or other curved pallet path 82.Moveable pallet director 80 is mounted so that the pallet path 82 receives cam followers 28 of pallets 20 at the bottom side 14 of system 10 from cam rails 60 and 62. As cam followers 28 ride through pallet director 80, through pallet path 82, they are directed upwards to the top side 11 of system 10 to one end of the pallet paths 78a-78d. Pallet director 80 is mounted for movement between four positions so that the upper end of pallet path 82 will be aligned at selected pallet paths 78a-78d. By moving pallet director 80, any of the paths 78a-78d, and therefore tracks 52a-52d in the corresponding tracks, may be selected.

As shown in FIG. 2, pallet director 80 is pivotally mounted at 84. A stepper motor 86 has a belt drive 88 to a cammed disk 90. Stepper motor 86 drives the belt 88 to rotate the disk 90 which moves the pallet director 80 between its four positions. Other selection means may be selected by those of skill in the art. Stepped motor 86 preferably has control means 92 which allows selection of paths 78a-78d in any order or combination. In the preferred embodiment, the stepper motor 86 is programmed to operate in a pattern of a, c, b, d, a, c, b, d, etc. with regard to pallet paths 78a-78d and tracks 52a-52d. Those skilled in the art can create an embodiment of system 10 programmable to particular paths or combinations for other applications. For example, the frequency of lane selection may be modified. The product stream may be unequally divided, such as a, b, a, c, a, d, etc. Those skilled in the art may vary both the amount of product on each line and the order of the lane selection.

Note that those skilled in the art may run this system in reverse and use the principles of the present invention to reduce multiple paths to a single path.

In operation, feed conveyor 30 provides a single stream of product on conveyor belt 32. Pallets 20 are continuously moving through system 10. The pallet director 80 is programmed to provide a pattern of path selection. As a pallet 20 rises from bottom side 14, Its cam follower 28 is funnelled by cam rails 60 and 62 to the bottom of pallet director 80. The cam follower 28 then rides in path 82, up pallet director 80, to the top side 12 of system 10. The stepper motor 86 positions the pallet director 80 to the selected path 78a-78d. As the pallet 20 rises to the top of pallet director 80, product is dumped from conveyor belt 32 onto pallet 20. The pallet 20 then proceeds through the selected path 78a, 78b, 78c or 78d in the selected track 52a-52d. As the drive means 16a-16b moves the pallet 20 through the system, the cam follower 28 follows the selected slot 58 in its track 52a-52d. Tracks 52a-52d direct the pallet 20 to its correct transverse position at the second end 21b of system 10.

At the second end 21b of system 10, product is dumped from pallet 20 as pallet 20 descends to the bottom side 14 of system 10. As drive means 16a-16b moves the pallet 20 back through system 10, return rails 60 and 62 urge or direct the cam follower 28 back to the center of system 10 where it can once again be engaged by the bottom of pallet director 80. As is shown by this embodiment, one skilled in the art can achieve various conversions of lanes from a smaller number to a larger number of lanes or from a larger number to a smaller number of lanes. Longitudinal spacing of conveyor rods 18, and therefore pallets 20, may be adjusted by those skilled in the art to provide the desired interval of product progressing through system 10. The number of lanes provided by tracks 52a-52d and their transverse spacing may of course be adjusted by those skilled in the art. and may be less than, or greater than, the four illustrated in the drawings. Flexibility is provided in the system by the programmability of the order and frequency of selection. Therefore, this system provides lane flexibility in an easily changeable format without requiring multiple conveyor lines which converge or diverge. Rather than requiring separate conveyors, this lane divider can be inserted in the system to multiplex or demultiplex a product stream.

Various modifications can be made to the present invention without departing from the apparent scope hereof.

Apparatus according to preferred embodiments of the invention include one or more of the following:

a) - said tracks are disposed in an upper zone and said return track is disposed in a lower zone beneath the upper zone.

b) - the director directs the carriers after they have been loaded with said material.

c) - the director includes a cam or other means to actuate the director guide in accordance with a pre-determined signal provided, for example, by a stepped electric motor.

## Claims

1. A lane divider apparatus for increasing or decreasing the number of lanes of product in a conveyor system,
   characterised in that it comprises:
   a. moveable pallets (20) for carrying the product;
   b. carriers (18) on which the pallets are mounted for transverse pallet movement across the apparatus;
   c. driver system (16a, 16b) to which the carriers are mounted for moving the carriers continuously longitudinally through the apparatus;
   d. multiple tracks (52) defining corresponding multiple paths through the apparatus, the pallets being slidably attached to the tracks while carrying product; and
   e. a pallet guide (80) moveably mounted on the apparatus for operational connection to each of the tracks for directing pallets into selected tracks.

2. Apparatus for dividing a flow of product from a conveyor into multiple paths,
   characterised in that the apparatus comprises:
   a. a frame (11);
   b. a driver (16a, 16b) mounted on the frame for continuous movement along a cyclic path from a first end (21a) of the frame longitudinally along a top side (12) of the frame to a second end (21b), down around the second end, back along a bottom (14) of the frame, and upward to the top of the frame at the first end;
   c. transverse rods (18) mounted on the driver for longitudinal movement along the path;
   d. at least one pallet (20) for receiving product to be conveyed, the pallet slidably mounted on the rods for transverse movement across the rods while the pallet is carried along the path by the rods;
   e. multiple lane tracks mounted within the frame in a diverging pattern from a central point at said first end so that the tracks are spaced apart at the said second end, the tracks being adapted for slidable engagement to the pallets; and

f. pallet director (80) mounted for movement among multiple positions corresponding to each of the tracks and for receiving pallets from the bottom side of the apparatus and directing each pallet to one of the selected tracks at the central point as the pallet rises to the top of the apparatus.

3. Apparatus according to Claim 1 or 2, wherein the pallet guide is programmable to a selected pattern of path section.

4. Apparatus for providing a plurality of sub-streams of material from a single stream of the material, characterised in that it comprises:

two or more tracks (52) respectively for said sub-streams, the tracks extending from a common loading location (21a) and each extending to a separate unloading location (21b);

a plurality of carriers (20) adapted to be moved along said tracks;

a return track for the carriers whereby they can be returned from the unloading locations to the loading location; and

a director (80) to direct the carriers to respective predetermined ones of said tracks.

5. Apparatus according to Claim 2, 3 or 4, wherein the director comprises a multi-position switch which presents the carriers to said pre-determined tracks.

6. Apparatus according to any of the preceding claims, wherein the director comprises an adjustable guide to guide successive carriers delivered by the return track to said respective pre-determined ones of said tracks.

7. Apparatus according to any of the preceding claims, wherein each carrier is slidably mounted on one or more elongate members (18) extending transverse of the track, the elongate members being mounted for movement along said track.

8. Apparatus according to any of the preceding claims, wherein each carrier has engagement means or other follower (26, 28) to engage (or follow) the track.

9. Apparatus according to Claim 8, wherein said follower is adapted also to engage or otherwise follow the guide (82) of the director.

10. Apparatus according to any of Claims 4 to 9, wherein the return track comprises convergent guides (60, 62) which serve to act on returning carriers so as to move them along their respective elongate member or members and thereby present them in succession to the director.

FIGURE 1

FIGURE 2

FIGURE 3

EP 0 492 922 A1

## FIGURE 4

EP 0 492 922 A1

EP 0 492 922 A1

**European Patent Office**

**EUROPEAN SEARCH REPORT**

Application Number

EP    91 31 1662

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 359 692 (ILLUMITRONIC SYSTEMS CORPORATION) * the whole document * | 1-10 | B65G17/00 |
| | ----- | | |

TECHNICAL FIELDS SEARCHED (Int. Cl.5)

B65G

The present search report has been drawn up for all claims

| Place of search | Date of completion of the search | Examiner |
|---|---|---|
| THE HAGUE | 18 MARCH 1992 | BEERNAERT J.E. |